(19) Europäisches Patentamt
European Patent Office
Office européen des brevets

(11) **EP 2 779 475 B1**

(12) **EUROPEAN PATENT SPECIFICATION**

(45) Date of publication and mention
of the grant of the patent:
**27.07.2016  Bulletin 2016/30**

(51) Int Cl.:
*H04B 3/32* *(2006.01)*     *H04M 11/06* *(2006.01)*

(21) Application number: **13305288.6**

(22) Date of filing: **14.03.2013**

(54) **Error feedback with detected constellation point**

Fehler-Feedback mit erkanntem Konstellationspunkt

Rétroaction d'erreur avec point de constellation détectée

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.09.2014  Bulletin 2014/38**

(73) Proprietor: **ALCATEL LUCENT**
**92100 Boulogne-Billancourt (FR)**

(72) Inventors:
• **Vanderhaegen, Dirk**
**1780 Wemmel (BE)**
• **van Bruyssel, Danny**
**2820 Bonheiden (BE)**

(74) Representative: **ALU Antw Patent Attorneys**
**Intellectual Property and Standards**
**Copernicuslaan 50**
**2018 Antwerp (BE)**

(56) References cited:
**EP-A1- 2 012 517**     **WO-A1-2010/086183**
**US-A1- 2009 245 335**

**Description**

**Technical Field of the Invention**

The present invention relates to crosstalk estimation within a wired communication system.

**Technical Background of the Invention**

Crosstalk (or inter-channel interference) is a major source of channel impairment for Multiple Input Multiple Output (MIMO) wired communication systems, such as Digital Subscriber Line (DSL) communication systems.

As the demand for higher data rates increases, DSL systems are evolving toward higher frequency bands, wherein crosstalk between neighboring transmission lines (that is to say transmission lines that are in close vicinity over part or whole of their length, such as twisted copper pairs in a cable binder) is more pronounced (the higher frequency, the more coupling).

A MIMO system can be described by the following linear model:

$$\mathbf{Y}(k)=\mathbf{H}(k)\mathbf{X}(k)+\mathbf{Z}(k) \quad (1),$$

wherein the N-component complex vector **X,** respectively **Y,** denotes a discrete frequency representation, as a function of the frequency/carrier/tone index k, of the symbols transmitted over, respectively received from, the N channels, wherein the NxN complex matrix **H** is referred to as the channel matrix: the (i,j)-th component of the channel matrix **H** describes how the communication system produces a signal on the i-th channel output in response to a signal being transmitted to the j-th channel input; the diagonal elements of the channel matrix describe direct channel coupling, and the off-diagonal elements of the channel matrix describe inter-channel coupling (also referred to as the crosstalk coefficients),

and wherein the N-component complex vector **Z** denotes additive noise over the N channels, such as Radio Frequency Interference (RFI) or thermal noise.

Different strategies have been developed to mitigate crosstalk and to maximize effective throughput, reach and line stability. These techniques are gradually evolving from static or dynamic spectral management techniques to multi-user signal coordination (or vectoring).

One technique for reducing inter-channel interference is joint signal precoding: the transmit data symbols are jointly passed through a precoder before being transmitted over the respective communication channels. The precoder is such that the concatenation of the precoder and the communication channel results in little or no inter-channel interference at the receiver. For instance, a linear precoder performs a matrix-product in the frequency domain of a transmit vector **X**(k) with a precoding matrix **P**(k), the precoding matrix **P**(k) being such that the resulting channel matrix **H**(k)**P**(k) is diagonalized, meaning the off-diagonal coefficients of the overall channel **H**(k)**P**(k) - and thus the inter-channel interference - mostly reduce to zero. Practically, and as a first order approximation, the precoder superimposes anti-phase crosstalk pre-compensation signals over the victim line along with the direct signal that destructively interfere at the receiver with the actual crosstalk signals from the respective disturber lines.

A further technique for reducing inter-channel interference is joint signal post-processing: the receive data symbols are jointly passed through a postcoder before being detected. The postcoder is such that the concatenation of the communication channel and the postcoder results in little or no inter-channel interference at the receiver.

The choice of the vectoring group, that is to say the set of communication lines, the signals of which are jointly processed, is rather critical for achieving good crosstalk mitigation performances. Within a vectoring group, each communication line is considered as a disturber line inducing crosstalk into the other communication lines of the group, and the same communication line is considered as a victim line receiving crosstalk from the other communication lines of the group. Crosstalk from lines that do not belong to the vectoring group is treated as alien noise and is not canceled.

Ideally, the vectoring group should match the whole set of communication lines that physically and noticeably interact with each other. Yet, local loop unbundling on account of national regulation policies and/or limited vectoring capabilities may prevent such an exhaustive approach, in which case the vectoring group would include a sub-set only of all the physically interacting lines, thereby yielding limited vectoring gains.

Signal vectoring is typically performed at a traffic aggregation point, whereat all the data symbols concurrently transmitted over, or received from, all the subscriber lines of the vectoring group are available. For instance, signal vectoring is advantageously performed within a Digital Subscriber Line Access Multiplexer (DSLAM) deployed at a Central office (CO) or as a fiber-fed remote unit closer to subscriber premises (street cabinet, pole cabinet, etc). Signal precoding is particularly appropriate for downstream communication (toward customer premises), while signal post-processing is particularly appropriate for upstream communication (from customer premises).

In the recommendation entitled *"self-FExT cancellation (Vectoring) For Use with VDSL2 Transceivers",* ref. G.993.5, and adopted by the International Telecommunication Union (ITU) on April 2010, the transceiver are configured to send downstream or upstream pilot sequences over the so-called SYNC symbols, which occur periodically after every 256 DATA symbols. In G.993.5 recommendation, it is further assumed that the access node transmits and receives the SYNC symbols over the vectored lines synchronously (super frame alignment) so as pilot signal transmission and interference measurements are carried out synchronously over the respective transmission lines.

On a given victim line, error samples, which comprise both the real and imaginary part of the slicer error (or receive error vector) as measured for a specific SYNC symbol on a per tone or group-of-tones basis are reported to a vectoring controller for further crosstalk estimation. The error samples are correlated with a given pilot sequence transmitted over a given disturber line in order to obtain the crosstalk coupling function from that disturber line. To reject the crosstalk contribution from the other disturber lines, the pilot sequences are made orthogonal to each other, for instance by using walsh-Hadamard sequences comprising '+1' and '-1' anti-phase symbols. The crosstalk estimates are used for initializing the precoder or postcoder coefficients.

Once the precoder or postcoder coefficients are initialized, the crosstalk coefficients keep on being tracked for any channel variation, as well as for any residual error in the initial estimates of the crosstalk channels. This is typically achieved by means of iterative update methods, such as Least Mean Square (LMS) methods, which gradually converges towards the optimal solution with respect to a given cost function, presently the power of the residual crosstalk signal.

In the idealized linear model, orthogonal pilot sequences as per G.993.5 recommendation are very effective and always produce accurate and unbiased estimates of the crosstalk channels (initialization) or of the residual crosstalk channels (tracking). Yet, due to non-linear effects, the crosstalk estimates can have an undesired offset (or bias) that drives the precoder or postcoder coefficients away from the actual crosstalk channels.

In high crosstalk environments for instance, the sum of the crosstalk vectors from all the pilot sequences transmitted over all the disturber lines can be such that the receive vector (or receive frequency sample) goes beyond the decision boundary of the demodulator. As a result, the error vector is reported against the wrong constellation point, yielding an offset in the estimate of the nominal or residual crosstalk channel.

In G.993.5 recommendation, the ideal expected transmit vector is estimated by the receiver. The set of vectors that can be used as pilots is restricted to two states: a normal state (+1) and an inverted state (-1), which is equivalent to Binary Phase Shift Keying (BPSK) modulation. The receiver determines what the transmit vector is expected to be (further referred to as demapping operation) based on determining the most probable half-plane, and this using only information of the specific tone itself. Quadrature Phase Shift Keying (QPSK or 4-QAM) modulation could alternatively be used for pilot modulation, in which case demapping is based on determining the most probable quadrant.

In the event of demapping errors, that is to say when the receiver selects a constellation point different from the transmit constellation point, the reported slicer error has a completely wrong value. This leads to major inaccuracies in the calculation of the crosstalk coupling coefficients (and thus of the precoder and postcoder coefficients) as the vectoring controller is not aware of the fact that a demapping error has occurred within the receiver.

A possible known solution for dealing with demapping errors would be to use multiple demapping decisions across multiple tones. Given that all probe tones in a particular SYNC symbol are all modulated with the same particular bit from of a given pilot sequence, one can use multiple tones to do a joint estimation. This should be robuster than the per-tone method, but in very low Signal to Noise Ratio (SNR) environments, the receiver could still make a wrong decision.

Another known solution is the communication of the used pilot sequence to the receiver. The advantage is that the receiver does not need to make a decision anymore. The disadvantage is that sending a message each time in order to change the pilot sequence is cumbersome, introduces delays in the initialization process, and reduces the flexibility for the vectoring controller to change the pilot sequence on the fly.

Still another known solution is the reporting of the full received vector. The advantage is that the receiver does not need to make a decision anymore. However, this solution suffers from a resolution problem: in case of high SNR, one wants to realize a very high cancellation depth. A reduction of the crosstalk to a level below the noise would mean that the error signal will be reduced to very small values compared to the received vector. The most efficient option for error feedback in G.993.5 recommendation makes use of a binary floating point format. As the error vector gets smaller during the convergence process, the exponent decreases, maintaining a constant relative quantization error. Therefore, the absolute quantization error decreases during convergence, even with a small number of bits for error feedback. If the full received vector is to be reported, the word length needs to be such that at the MSB side it can represent the largest direct signal and at the LSB side it can represent the smallest error signal. Therefore, a certain absolute inaccuracy is present. In the last stages of convergence, this absolute quantization error yields a relatively large inaccuracy. To counteract this, many bits would be required to encode the error vector, which would increase the required bandwidth for error feedback and thus would reduce the upstream data rate for the end-user.

The following background art, which may be regarded as useful for understanding the present invention and its relationship to the prior art, is further acknowledged and briefly discussed.

The US patent application entitled *"signal Processing System, Filter Device and Signal Processing Method"*, and published on October 1, 2009 with publication number US 2009/0245335 A1, discloses a multi-channel signal processing system including a filter unit arranged at a signal transmitting end and a feedback unit arranged at a signal receiving end. The filter unit includes a signal synthesis unit and a filter, where the filter is adapted to filter crosstalk source signals of signals to be transmitted and perform subsequent filtering in accordance with received feedback information. The filters can operate in the time domain or in the frequency-domain. 3 possible types of error feedback are used to adjust the weight coefficients of the adaptive filters. Type 1 error feedback information refer to the received signal samples. Type 2 error feedback information refer to the equalized received signal samples. Type 3 error feedback information refer to the residual difference of the data signals. These error feedback information can be measured in the time domain or in the frequency-domain.

## Summary of the Invention

It is an object of the present invention to alleviate or overcome the aforementioned shortcoming or drawbacks of the known solutions.

In accordance with a first aspect of the invention, a transceiver for coupling to a transmission line is configured, during the reception of a crosstalk probing signal, to measure an error vector between a received frequency sample of the crosstalk probing signal and a selected constellation point onto which the received frequency sample is demapped, and to report error information indicative of the measured error vector to a vectoring controller for crosstalk estimation. The transceiver is further configured to report demapping information indicative of the selected constellation point onto which the received frequency sample is demapped to the vectoring controller.

Such a transceiver typically forms part of:

- a subscriber device that supports wired communication over a subscriber loop, such as a desktop, a laptop, a modem, a network gateway, a media gateway, etc; or
- an access node (or access multiplexer) that supports wired communication to subscriber devices over an access plant, such as a DSLAM, an Ethernet switch, an edge router, etc, and deployed at a CO or as a fiber-fed remote unit closer to subscriber premises (street cabinet, pole cabinet, etc).

In accordance with another aspect of the invention, a vectoring controller is configured, during the transmission of a crosstalk probing signal, to receive error information indicative of an error vector as measured by a transceiver between a received frequency sample of the crosstalk probing signal and a selected constellation point onto which the received frequency sample is demapped. The vectoring controller is further configured to receive demapping information indicative of the selected constellation point onto which the received frequency sample is demapped from the transceiver, and to estimate a crosstalk coefficient based on both the received error information and the received demapping information.

Such a vectoring controller typically forms part of the access node.

In accordance with still another aspect of the invention, a method for measuring crosstalk over a transmission line comprises the steps of, during the reception of a crosstalk probing signal, measuring an error vector between a received frequency sample of the crosstalk probing signal and a selected constellation point onto which the received frequency sample is demapped, and reporting error information indicative of the measured error vector to a vectoring controller for crosstalk estimation. The method further comprises the step of reporting demapping information indicative of the selected constellation point onto which the received frequency sample is demapped to the vectoring controller.

In accordance with still another aspect of the invention, a method for estimating a crosstalk coefficient towards a transmission line, comprises the step of, during the transmission of a crosstalk probing signal, receiving error information indicative of an error vector as measured by a transceiver between a received frequency sample of the crosstalk probing signal and a selected constellation point onto which the received frequency sample is demapped. The method further comprises the steps of receiving demapping information indicative of the selected constellation point onto which the received frequency sample is demapped from the transceiver, and estimating the crosstalk coefficient based on both the received error information and the received demapping information.

In one embodiment of the invention, the demapping information comprises an index value selected from an ordered index representation of constellation points of a constellation grid that is used to demap the received frequency sample.

In one embodiment of the invention, the constellation grid is a BPSK constellation grid, and the demapping information comprises 1 bit per reported frequency sample.

In an alternative embodiment of the invention, the constellation grid is a QPSK constellation grid, and the demapping information comprises 2 bits per reported frequency sample.

In one embodiment of the invention, the error information comprises quantified In-phase (I) and Quadrature

(Q) components of the measured error vector.

In one embodiment of the invention, the I/Q components of the measured error vector are quantified using floating point number representation.

In one embodiment of the invention, the I/Q components of the measured error vector uses a common exponent value.

The vectoring controller makes use of error feedback reports from the transceivers to estimate the crosstalk coefficients, and further to initialize or refine the coefficients of the precoder and postcoder.

In the proposed method, the error feedback report comprises two pieces of information:

- the I/Q components (real and imaginary parts) of the slicer error as measured by the transceiver, typically represented as two binary floating point numbers comprising respective mantissa and exponent binary values; and
- the decision that has been made by the transceiver as per the assumed transmit constellation point, with respect to which the slicer error has been measured.

In case of BPSK demapping, this is one additional bit per reported error vector to indicate the chosen half plane. In case of 4-QAM demapping, this corresponds to two additional bits per reported error vector to indicate the chosen quadrant.

The vectoring controller can thus see whether the transceiver has made a demapping error, based on the comparison of the additional bit(s) with the exact pilot sequence that was transmitted on the transmission line. If a demapping error has occurred, the vectoring controller corrects the wrong error vector value back to a correct value, and uses that corrected value in the crosstalk estimation process.

The proposed method allows for error reporting with the lowest possible quantization noise (e.g., by means of floating point number representation) while being insensitive to demapping errors, and further allows the change on-the-fly of the pilot sequence by the vectoring controller without prior notice to the subscriber device.

## Brief Description of the Drawings

The above and other objects and features of the invention will become more apparent and the invention itself will be best understood by referring to the following description of an embodiment taken in conjunction with the accompanying drawings wherein:

- fig. 1 represents an overview of an access plant;
- fig. 2 represents an access node and a subscriber device as per the present invention;
- fig. 3A represents the measured error vector of a receive frequency sample without any demapping error; and
- fig. 3B represents the measured error vector of a receive frequency sample with a demapping error.

## Detailed Description of the Invention

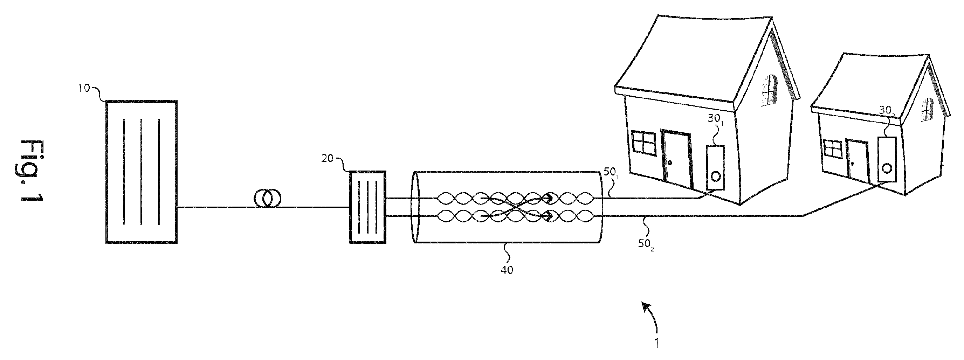

There is seen in fig. 1 an access plant 1 comprising a network unit 10 at a CO, a remote unit 20 coupled via one or more optical fibers to the network unit 10, and further coupled via a copper loop plant to Customer Premises Equipment (CPE) 30 at various subscriber premises.

The copper loop plant comprises a common access segment 40, wherein the subscriber lines are in close vicinity with each other and thus induce crosstalk into each other, and dedicated loop segments 50 for final connection to the subscriber premises. The transmission media is typically composed of high-category copper Unshielded Twisted Pairs (UTP).

The remote unit 20 comprises a vectoring processing unit for jointly processing the data symbols that are being transmitted over, or received from, the loop plant in order to mitigate the crosstalk induced within the common access segment and to increase the communication data rates achievable over the respective subscriber lines.

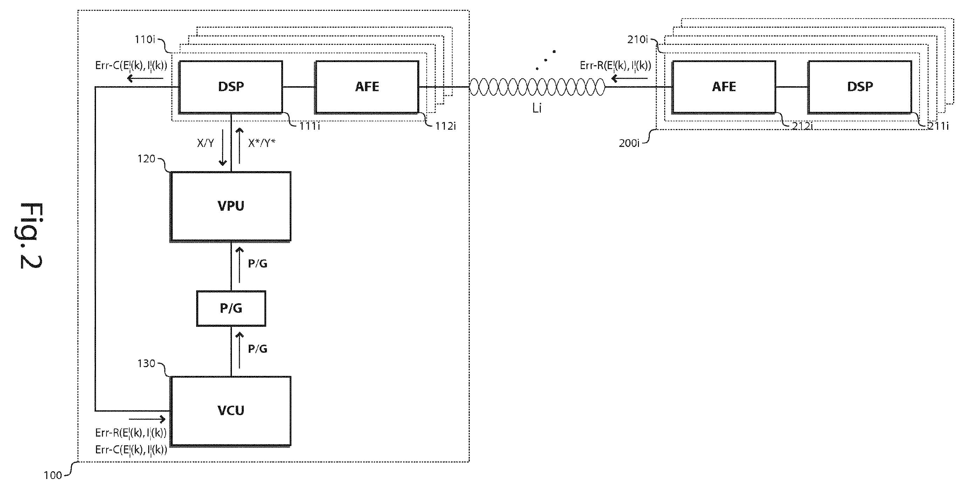

There is seen in fig. 2 a remote unit 100 and CPEs 200i as per the present invention. The remote unit 100 is coupled to the CPEs 200i through respective transmission lines Li, which are assumed to form part of the same vectoring group.

The remote unit 100 comprises:

- DSL transceivers 110i;
- a Vectoring Processing Unit 120 (or VPU); and
- a Vectoring Control Unit 130 (or VCU) for controlling the operation of the VPU 120.

The DSL transceivers 110i are individually coupled to the VPU 120 and to the VCU 130. The VCU 130 is further coupled to the VPU 120.

The DSL transceivers 110i respectively comprise:

- a Digital Signal Processor (DSP) 111i; and
- an Analog Front End (AFE) 112i.

The CPE 200i comprises respective DSL transceivers 210i.

The DSL transceivers 210i respectively comprise:

- a Digital Signal Processor (DSP) 211i; and
- an Analog Front End (AFE) 212i.

The AFEs 112i and 212i respectively comprise a Digital-to-Analog Converter (DAC) and an Analog-to-Digital Converter (ADC), a transmit filter and a receive filter for confining the signal energy within the appropriate communication frequency bands while rejecting out-of-band interference, a line driver for amplifying the transmit signal and for driving the transmission line, and a Low Noise Amplifier (LNA) for amplifying the receive signal with as little noise as possible.

The AFEs 112i and 212i further comprise a hybrid for coupling the transmitter output to the transmission line and the transmission line to the receiver input while achieving low transmitter-receiver coupling ratio, impedance-matching circuitry for adapting to the characteristic impedance of the transmission line, and isolation circuitry (typically a transformer).

The DSPs 111i and 211i are respectively configured to operate downstream and upstream DSL communication channels.

The DSPs 111i and 211i are further configured to operate downstream and upstream DSL control channels that are used to transport DSL control traffic, such as diagnosis or management commands and responses. Control traffic is multiplexed with user traffic over the DSL channel.

More specifically, the DSPs 111i and 211i are for encoding and modulating user and control data into digital data symbols, and for de-modulating and decoding user and control data from digital data symbols.

The following transmit steps are typically performed within the DSPs 111i and 211i:

- data encoding, such as data multiplexing, framing, scrambling, error correction encoding and interleaving;
- signal modulation, comprising the steps of ordering the carriers according to a carrier ordering table, parsing the encoded bit stream according to the bit loadings of the ordered carriers, and mapping each chunk of bits onto an appropriate transmit constellation point (with respective carrier amplitude and phase), possibly with Trellis coding;
- signal scaling;
- Inverse Fast Fourier Transform (IFFT);
- Cyclic Prefix (CP) insertion; and possibly
- time-windowing.

The following receive steps are typically performed within the DSPs 111i and 211i:

- CP removal, and possibly time-windowing;
- Fast Fourier Transform (FFT);
- Frequency EQualization (FEQ);
- signal de-modulation and detection, comprising the steps of applying to each and every equalized frequency sample an appropriate constellation grid, the pattern of which depends on the respective carrier bit loading, detecting the expected transmit constellation point and the corresponding transmit bit sequence, possibly with Trellis decoding, and re-ordering all the detected chunks of bits according to the carrier ordering table; and
- data decoding, such as data de-interleaving, RS decoding (byte errors, if any, are corrected at this stage), descrambling, frame delineation and de-multiplexing.

The DSPs 111i are further configured to supply transmit frequency samples to the VPU 120 before Inverse Fast Fourier Transform (IFFT) step for joint signal precoding, and to supply receive frequency samples to the VPU 120 after Fast Fourier Transform (FFT) step for joint signal post-processing.

The DSPs 111i are further configured to receive corrected frequency samples from the VPU 120 for further transmission or detection. Alternatively, the DSPs 111i may receive correction samples to add to the initial frequency samples before further transmission or detection.

The VPU 120 is configured to mitigate the crosstalk induced over the transmission lines. This is achieved by multiplying a vector of transmit frequency samples with a precoding matrix $\mathbf{P}$ so as to pre-compensate an estimate of the expected crosstalk (downstream), or by multiplying a vector of receive frequency samples with a crosstalk cancellation matrix G so as to post-compensate an estimate of the incurred crosstalk (upstream).

Let N denote the total number of transmission lines within the vectoring group, and let i and j denote line indexes ranging from 1 to N. Let k denote a frequency index ranging from 0 to K, and let 1 denote a data symbol transmission or reception index.

In case of Frequency Division Duplexing (FDD) transmission, the frequency index k takes on different and nonoverlapping range values depending on whether downstream or upstream communication is considered. In case of Time Division Duplexing (TDD) transmission, the frequency index k may take on common range values for both downstream and upstream communications.

Let $X_i^1(k)_C$ denote the transmit downstream frequency sample to be transmitted over line Li at frequency index k during data symbol 1 by the transceiver 110i before crosstalk pre-compensation by the VPU 120. Let $X_i^1(k)_C^*$ denote the transmit downstream frequency sample after crosstalk pre-compensation by the VPU 120. And finally, let $Y_i^1(k)_R$ denote the receive downstream frequency sample received from line Li at frequency index k during data symbol 1 by the transceiver 210i.

Similarly, Let $X_i^1(k)_R$ denote the transmit upstream frequency sample to be transmitted over line Li at frequency index k during data symbol 1 by the transceiver 210i. Let $Y_i^1(k)_C$ denote the receive upstream frequency sample received from line Li at frequency index k during data symbol 1 by the transceiver 110i. And finally, let $Y_i^1(k)_C^*$ denote the receive upstream frequency sample after crosstalk post-compensation by the VPU 120.

The following equations hold:

$$\begin{bmatrix} X_1^1(k)_C^* \\ X_2^1(k)_C^* \\ \vdots \\ X_N^1(k)_C^* \end{bmatrix} = \begin{bmatrix} P_{1,1}(k) & P_{1,2}(k) & \cdots & P_{1,N}(k) \\ P_{2,1}(k) & P_{2,2}(k) & & \vdots \\ \vdots & & & P_{N-1,N}(k) \\ P_{N,1}(k) & \cdots & P_{N,N-1}(k) & P_{N,N}(k) \end{bmatrix} \cdot \begin{bmatrix} X_1^1(k)_C \\ X_2^1(k)_C \\ \vdots \\ X_N^1(k)_C \end{bmatrix} \quad (2),$$

$$\begin{bmatrix} Y_1^1(k)_C^* \\ Y_2^1(k)_C^* \\ \vdots \\ Y_N^1(k)_C^* \end{bmatrix} = \begin{bmatrix} G_{1,1}(k) & G_{1,2}(k) & \cdots & G_{1,N}(k) \\ G_{2,1}(k) & G_{2,2}(k) & & \vdots \\ \vdots & & & G_{N-1,N}(k) \\ G_{N,1}(k) & \cdots & G_{N,N-1}(k) & G_{N,N}(k) \end{bmatrix} \cdot \begin{bmatrix} Y_1^1(k)_C \\ Y_2^1(k)_C \\ \vdots \\ Y_N^1(k)_C \end{bmatrix} \quad (3),$$

and

$$Y_R = H \cdot X_C^* + Z = H \cdot P \cdot X_C + Z \quad (4),$$

$$Y_C^* = G \cdot Y_C = G \cdot H \cdot X_R + G \cdot Z \quad (5).$$

In the matrix P or G, a row i represents a particular victim line Li, while a column j represents a particular disturber line Lj. At the intersection, the coupling coefficient that should be applied to the corresponding disturber transmit or receive frequency sample for mitigating over the victim line Li the crosstalk from the disturber line Lj. Not all the coefficients of the matrix need to be determined, for instance on account of limited vectoring capabilities first assigned to the strongest crosstalkers, or still for instance due to the fact that some lines do not noticeably interact with each other. The undetermined coefficients are preferably set to 0.

Also, it is noteworthy that a communication line Li for which vectoring operation is not supported or not enabled, such as a legacy line, yet that still noticeably interferes with other communication lines, is only considered as a disturber line within the vectoring group. The off-diagonal coefficients of the corresponding $i^{th}$ row of the matrix **P** or G are thus all set to 0.

The VCU 130 is basically for controlling the operation of the VPU 120, and more specifically for estimating the crosstalk coefficients between the transmission lines of the vectoring group, and for initializing or updating the coefficients of the precoding matrix **P** and of the crosstalk cancellation matrix **G** from the so-estimated crosstalk coefficients.

The VCU 130 starts first by configuring the respective downstream and upstream pilot sequences to be used over the respective transmission lines. The pilot digit transmitted over the transmission line Li at frequency index k during a given symbol period 1 is denoted as $W_i^1(k)$. The pilot sequences are mutually orthogonal, and comprises L pilot digits $\{W_i^1(k)\}_1$ to be transmitted over L symbol periods with $L \geq N$ (in order to satisfy the orthogonality requirement).

The VCU 130 gathers respective slicer errors as measured during the detection of the pilot digits by the remote transceivers 210i for downstream communication, and by the local transceivers 110i for upstream communication.

The slicer error as measured by the transceiver 110i or 210i over a victim line Li at frequency index k during symbol period 1 is denoted as $E_i^1(k)$.

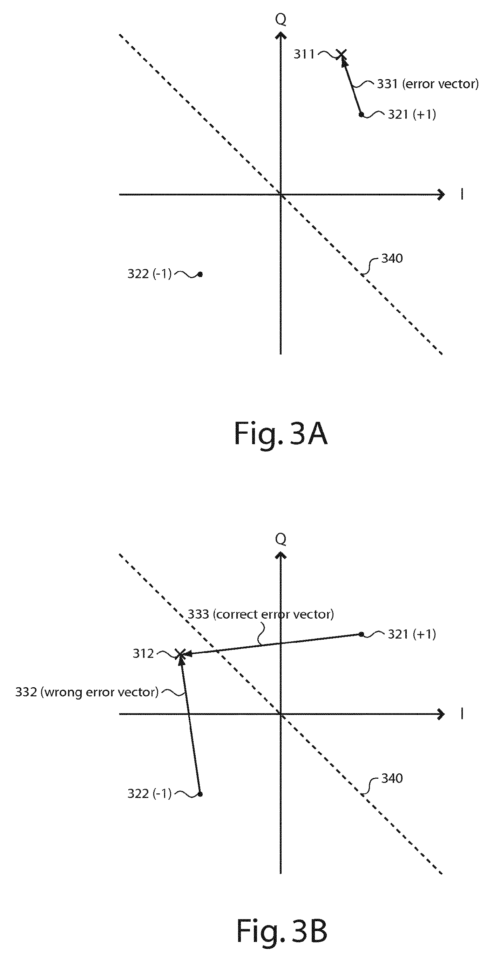

With regard to fig. 3A, and assuming BPSK is used for modulating the pilot signal, the slicer error is defined as the error vector 331 between an equalized receive frequency sample 311 after crosstalk pre-compensation or post-compensation, and a reference constellation point that has been selected by the receiver for demapping the receive frequency sample 311, presently the constellation point 321, which corresponds to the normal state (+1).

The constellation point 322, which corresponds to the inverted state (-1) has been depicted too in fig. 3A, together with the decision boundary line 340 for demapping the receive frequency sample. If the receive frequency sample 311 belongs to the upper-right half plane delimited by the decision boundary line 340, then the constellation point 321 (+1) is selected as being the most-probable transmit frequency sample; else if the receive frequency sample 310 belongs to the lower-left half plane, then the constellation point 322 (-1) is selected as being the most-probable transmit frequency sample.

Let $\hat{X}_i^1(k)_C$ and $\hat{X}_i^1(k)_R$ denote the expected transmit constellation point for downstream and upstream detection respectively. Thus we have: $E_i^1(k) = \hat{H}_{ii}(k)^{-1} \cdot Y_i^1(k)_R - \hat{X}_i^1(k)_C$ (6) for downstream detection within the transceiver 210i, and $E_i^1(k) = \hat{H}_{ii}(k)^{-1} \cdot Y_i^1(k)_C^* - \hat{X}_i^1(k)_R$ (7) for upstream detection within the transceiver 110i, wherein $\hat{H}_{ii}(k)^{-1}$ denotes the FEQ coefficient that is used over the transmission line Li at frequency index k, which shall match the inverse of the direct transfer function $H_{ii}(k)$ as close as possible.

The slicer error $E_i^1(k)$ comprises both a real and an imaginary part quantified using a binary floating point number representation:

$$\Re\left(E_i^1(k)\right) = M_R \cdot 2^E \quad (8),$$

and

$$\Im\left(E_i^1(k)\right) = M_I \cdot 2^E \quad (9),$$

wherein $M_R$ and $M_I$ denotes the respective binary mantissa values of the real and imaginary parts of the error vector $E_i^1(k)$, encoded over a first given number of bits (typically 6), and wherein E denotes a common binary exponent value of the real and imaginary parts of the error vector $E_i^1(k)$, encoded over a second given number of bits (typically 4).

Alternative number representations can be envisioned as well, such as the use of distinct exponent values for the real and imaginary parts of the error vector, the use of a fixed point number representation, etc.

The transceivers 110i and 210i are further configured to report to the vectoring controller 130 the measured slicer error value $E_i^1(k)$, together with an index $I_i^1(k)$ of the selected constellation point with reference to which the slicer error $E_i^1(k)$ was measured (see Err-C and Err-R messages in fig. 1). with BPSK modulation, the index $I_i^1(k)$ is 1 bit long (e.g., '0' for the normal state, and '1' for the inverted state), while with 4-QAM modulation, the index $I_i^1(k)$ is 2 bits long ('00', '01', '10' or '11' for the 4 respective constellation points of the 4-QAM constellation grid).

So as to reduce the amount of error feedback information, interference measurements are typically available at decimated frequency indexes k = k1.D1, wherein D1 denotes a frequency decimation factor.

Next, the VCU 130 determines whether a demapping error has occurred for the respective error measurement $E_i^1(k)$ by comparing the reported constellation point index $I_i^1(k)$ with the corresponding transmit pilot digit $w_i^1(k)$ that was used to modulate the corresponding transmit pilot frequency sample. Indeed, the vcu 130 has the exact knowledge of the exact pilot sequence that was configured for a given transmission line in both downstream and upstream directions, and thus can easily derive the actual transmit constellation point $X_i^1(k)_{C/R}$ that was used for a given transmission line, a given direction of communication and a given symbol period.

If a mismatch is detected, then a demapping error has occurred, and the VCU 130 corrects the reported slicer error value accordingly:

$$E_i^1(k)^* = \hat{X}_i^1(k)_{C/R} + E_i^1(k) - X_i^1(k)_{C/R} \quad (10),$$

wherein $E_i^1(k)^*$ denote the corrected slicer error value, and wherein $\hat{X}_i^1(k)_C$ is directly derived from the reported constellation point index $I_i^1(k)$ .

With regard now to fig. 3B, and still assuming BPSK is used for modulating the pilot signal, another received frequency sample 312 is depicted that crosses the decision boundary line 340 on account of strong crosstalk incurred over the transmission line. As a result, the receiver demaps the receive frequency sample onto the wrong constellation point 322 (-1), although the normal state 321 (+1) was transmitted, and thus report the wrong error vector 332, thereby substantially biasing the crosstalk estimation process. If such a demapping error occurs, the VCU 130 corrects the error vector back to the right value 333 as per equation 10.

Finally, the VCU 130 correlates the L (possibly corrected) error measurements $E_i^1(k)^*$ as measured over the victim line Li over a complete acquisition cycle with the respective pilot digits of a pilot sequence transmitted over a disturber line Lj so as to obtain an estimate of the equalized crosstalk coefficients $H_{i,j}(k)/H_{i,i}(k)$ from the disturber line Lj into the victim line Li at frequency index k. As the pilot sequences are mutually orthogonal, the contributions from the other disturber lines reduce to zero after this correlation step.

The VCU 130 can now proceed with the computation or update of the precoding matrix **P** and of the crosstalk cancellation matrix **G** from the so-determined crosstalk coefficients. The VCU 130 can use a first-order or second-order matrix inversion to compute the coefficients of the precoding matrix **P** and of the crosstalk cancellation matrix **G,** or an LMS iterative algorithm for updating the coefficients of the precoding matrix **P** and of the crosstalk cancellation matrix **G** to their optimal value.

It is to be noticed that the term 'comprising' should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled' should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The description and drawings merely illustrate the principles of the invention. It will thus be appreciated that those skilled in the art will be able to devise various arrangements. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, digital signal processor (DSP) hardware, network processor, application specific integrated circuit (ASIC), field programmable gate array (FPGA), etc. Other hardware, conventional and/or custom, such as read only memory (ROM), random access memory (RAM), and non volatile storage, may also be included.

**Claims**

1.  **A transceiver** (110i; 210i) for coupling to **a transmission line** (Li) and configured, during the reception of **a crosstalk probing signal,** to measure **an error vector** (331; 332) between **a received frequency sample** (311; 312) of the crosstalk probing signal and a **selected constellation point** (321; 322) onto which the received frequency sample is demapped, and to report **error information** ( $E_i^1(k)$ ) indicative of the measured error vector to **a vectoring controller** (130) for crosstalk estimation,

    **characterized in that** the transceiver is further configured to report **demapping information** ( $I_i^1(k)$ ) indicative of the selected constellation point onto which the received frequency sample is demapped to the vectoring controller.

2.  **A transceiver** (110i; 210i) according to claim 1, *wherein* the demapping information comprises **an index value** ( $I_i^1(k)$ ) selected from **an ordered index representation** of **constellation points** (321; 322) of **a constellation grid** that is used to demap the received frequency sample.

3.  **A transceiver** (110i; 210i) according to claim 2, *wherein* the **constellation grid** is **a Binary Phase Shift Keying BPSK constellation grid,**
    *and wherein* the demapping information comprises 1 bit per reported frequency sample.

4.  **A transceiver** (110i; 210i) according to claim 2, *wherein* the **constellation grid** is **a Quadrature Phase Shift Keying QPSK constellation grid,**
    *and wherein* the demapping information comprises 2 bits per reported frequency sample.

5.  **A transceiver** (110i; 210i) according to claim 1, *wherein* the error information comprises quantified In-phase I and Quadrature Q components of the measured error vector.

6.  **A transceiver** (110i; 210i) according to claim 5, *wherein* the I/Q components of the measured error vector are quantified using **a floating point number representation.**

7.  **A transceiver** (110i; 210i) according to claim 6, *wherein* the I/Q components of the measured error vector uses **a common exponent value.**

8.  **A subscriber device** (200) comprising **a transceiver** (210i) according to any of claims 1 to 7,
    *and wherein* the subscriber device is communicatively coupled to the vectoring controller through the transmission line.

9.  **An access node** (100) comprising **a transceiver** (110i;) according to any of claims 1 to 7.

10. **A vectoring controller** (130) for estimating a **crosstalk coefficient** towards **a transmission line** (Li), and configured, during the transmission of **a crosstalk probing signal,** to receive **error information** ( $E_i^1(k)$ ) indicative of **an error vector** (331; 332) as measured by **a transceiver** (110i; 210i) between **a received frequency sample** (311; 312) of the crosstalk probing signal and **a selected constellation point** (321; 322) onto which the received frequency sample is demapped,
    **characterized in that** the vectoring controller is further configured to receive **demapping information** ( $I_i^1(k)$ ) indicative of the selected constellation point onto which the received frequency sample is demapped from the transceiver, and to estimate the crosstalk coefficient based on both the received error information and the received demapping information.

11. **An access node** (100) comprising **a vectoring controller** (130) according to claim 10.

12. **A method** for measuring crosstalk over **a transmission line** (Li) and comprising the steps of, during the reception of **a crosstalk probing signal,** measuring **an error vector** (331; 332) between **a received frequency sample** (311; 312) of the crosstalk probing signal and **a selected constellation point** (321; 322) onto which the received frequency sample is demapped, and reporting **error information** ( $E_i^1(k)$ ) indicative of the measured error vector to **a vectoring controller** (130) for crosstalk estimation,

**characterized in that** the method further comprises the step of reporting **demapping information** $\left( \mathtt{I}_i^1(k) \right)$ indicative of the selected constellation point onto which the received frequency sample is demapped to the vectoring controller.

13. **A method** for estimating a crosstalk coefficient towards **a transmission line** (Li), and comprising the step of, during the transmission of **a crosstalk probing signal,** receiving **error information** $\left( \mathtt{E}_i^1(k) \right)$ indicative of **an error vector** (331; 332) as measured by **a transceiver** (110i; 210i) between **a received frequency sample** (311; 312) of the crosstalk probing signal and **a selected constellation point** (321; 322) onto which the received frequency sample is demapped,

**characterized in that** the method further comprises the steps of receiving **demapping information** $\left( \mathtt{I}_i^1(k) \right)$ indicative of the selected constellation point onto which the received frequency sample is demapped from the transceiver, and estimating the crosstalk coefficient based on both the received error information and the received demapping information.


**Patentansprüche**

1. **Transceiver** (110i; 210i) zur Kopplung an **eine Übertragungsleitung** (Li) und ausgelegt, um beim Empfang **eines Nebensprech-Sondierungssignals einen Fehlervektor** (331; 332) zwischen **einer empfangenen Frequenzprobe** (311; 312) des Nebensprech-Sondierungssignals und **einem ausgewählten Konstellationspunkt** (321; 322) zu messen, auf den die empfangene Frequenzprobe gedemappt wird, und um eine **Fehlerinformation** $(E_i^l(k))$, die bezeichnend ist für den gemessenen Fehlervektor, an **einen Vectoring-Controller** (130) zur Nebensprechschätzung zu melden,

**dadurch gekennzeichnet, dass** der Transceiver weiterhin ausgelegt ist, um eine **Demapping-Information** $(I_i^l(k))$, die bezeichnend ist für den ausgewählten Konstellationspunkt, auf den die empfangene Frequenzprobe gedemappt wird, an den Vectoring-Controller zu melden.

2. **Transceiver** (110i; 210i) nach Anspruch 1, *wobei* die Demapping Information **einen Indexwert** $(I_i^l(k))$ umfasst, der aus **einer geordneten Indexdarstellung** von **Konstellationspunkten** (321; 322) **eines Konstellationsgitters** ausgewählt wird, das zum Demappen der empfangenen Frequenzprobe verwendet wird.

3. **Transceiver** (110i; 210i) nach Anspruch 2, *wobei* das **Konstellationsgitter ein Zweiphasenumtastungs-BPSK-Konstellationsgitter** ist, *und wobei* die Demapping-Information 1 Bit pro gemeldete Frequenzprobe umfasst.

4. **Transceiver** (110i; 210i) nach Anspruch 2, *wobei* das **Konstellationsgitter ein Vierphasenumtastungs-QPSK-Konstellationsgitter** ist, *und wobei* die Demapping-Information 2 Bits pro gemeldete Frequenzprobe umfasst.

5. **Transceiver** (110i; 210i) nach Anspruch 1, *wobei* die Fehlerinformation quantifizierte In-Phasen-I- und Quadratur-Q-Komponenten des gemessenen Fehlervektors umfasst.

6. **Transceiver** (110i; 210i) nach Anspruch 5, *wobei* die I/Q-Komponenten des gemessenen Fehlervektors quantifiziert werden unter Verwendung einer **Gleitpunktzahldarstellung.**

7. **Transceiver** (110i; 210i) nach Anspruch 6, *wobei* die I/Q-Komponenten des gemessenen Fehlervektors **einen gemeinsamen Exponentwert** verwenden.

8. **Teilnehmergerät** (200), umfassend **einen Transceiver** (210i) nach einem beliebigen der Ansprüche 1 bis 7, *und wobei* das Teilnehmergerät kommunikativ an den Vectoring-Controller über die Übertragungsleitung gekoppelt ist.

9. **Zugangsknoten** (100), umfassend **einen Transceiver** (110i) nach einem beliebigen der Ansprüche 1 bis 7.

10. **Vectoring-Controller** (130) zum Schätzen **eines Nebensprech-Koeffizienten** zu **einer Übertragungsleitung** (Li) und ausgelegt, um bei der Übertragung **eines Nebensprech-Sondierungssignals** eine **Fehlerinformation** $(E_i^l(k))$ zu empfangen, die bezeichnend ist für **einen Fehlervektor** (331; 332), wie er von **einem Transceiver** (110i; 210i) gemessen wird, zwischen **einer empfangenen Frequenzprobe** (311; 312) des Nebensprech-Sondierungssignals und **einem ausgewählten Konstellationspunkt** (321; 322), auf den die empfangene Frequenzprobe gedemappt wird,

**dadurch gekennzeichnet, dass** der Vectoring-Controller weiterhin ausgelegt ist, um eine **Demapping-Information** $(I_i^l(k))$ zu empfangen, die bezeichnend ist für den ausgewählten Konstellationspunkt, auf den die empfangene Frequenzprobe vom Transceiver gedemappt wird, und um den Nebensprech-Koeffizienten basierend sowohl auf der empfangenen Fehlerinformation als auch auf der empfangenen Demapping-Information zu schätzen.

11. **Zugangsknoten** (100), umfassend **einen Vectoring-Controller** (130) nach Anspruch 10.

12. **Verfahren** zur Nebensprechmessung über **eine Übertragungsleitung** (Li) und umfassend, beim Empfang **eines Nebensprech-Sondierungssignals,** die Schritte des Messens **eines Fehlervektors** (331; 332) zwischen **einer empfangenen Frequenzprobe** (311; 312) des Nebensprech-Sondierungssignals und **einem ausgewählten Konstellationspunkt** (321; 322), auf den die empfangene Frequenzprobe gedemappt wird, und des Meldens einer **Fehlerinformation** $(E_i^l(k))$, die bezeichnend ist für den gemessenen Fehlervektor, an **einen Vectoring-Controller** (130) zur Nebensprechschätzung,

**dadurch gekennzeichnet, dass** das Verfahren weiterhin den Schritt des Meldens einer **Demapping-Information** $(I_i^l(k))$ umfasst, die bezeichnend ist für den ausgewählten Konstellationspunkt, auf den die empfangene Frequenzprobe gedemappt wird, an den Vectoring-Controller.

13. **Verfahren** zum Schätzen **eines Nebensprech-Koeffizienten** zu **einer Übertragungsleitung** (Li) und umfassend, bei der Übertragung **eines Nebensprech-Sondierungssignals,** den Schritt des Empfangens einer **Fehlerinformation** $(E_i^l(k))$, die bezeichnend ist für **einen Fehlervektor** (331; 332), wie er von **einem Transceiver** (110i; 210i) gemessen wird, zwischen **einer empfangenen Frequenzprobe** (311; 312) des Nebensprech-Sondierungssignals und **einem ausgewählten Konstellationspunkt** (321; 322), auf den die empfangene Frequenzprobe gedemappt wird,

**dadurch gekennzeichnet, dass** das Verfahren weiterhin den Schritt des Empfangens einer **Demapping-Information** $(I_i^l(k))$ umfasst, die bezeichnend ist für den ausgewählten Konstellationspunkt, auf den die empfangene Frequenzprobe vom Transceiver gedemappt wird, und des Schätzens des Nebensprech-Koeffizienten basierend sowohl auf der empfangenen Fehlerinformation als auch auf der empfangenen Demapping-Information.

**Revendications**

1. **Émetteur-récepteur** (110i ; 210i) à coupler à **une ligne de transmission** (Li) et configuré, lors de la réception **d'un signal de sondage de diaphonie,** pour mesurer **un vecteur d'erreur** (331 ; 332) entre **un échantillon de fréquence reçu** (311 ; 312) du signal de sondage de diaphonie et **un point de constellation sélectionné** (321 ; 322) sur lequel l'échantillon de fréquence reçu est extrait, et pour rapporter des **informations d'erreur** $\left( E_i^l(k) \right)$ indiquant le vecteur d'erreur mesuré à **un dispositif de commande de vectorisation** (130) pour une estimation de diaphonie, **caractérisé en ce que** l'émetteur-récepteur est en outre configuré pour rapporter **des informations d'extraction** $\left( I_i^l(k) \right)$ indiquant le point de constellation sélectionné sur lequel l'échantillon de fréquence reçu est extrait au dispositif de commande de vectorisation.

2. **Émetteur-récepteur** (110i ; 210i) selon la revendication 1, *dans lequel* les informations d'extraction comprennent **une valeur d'indice** $\left( I_i^l(k) \right)$ sélectionnée à partir **d'une représentation d'indice ordonnée de points de constellation** (321 ; 322) **d'une grille de constellation** qui est utilisée pour extraire l'échantillon de fréquence reçu.

**3.** **Émetteur-récepteur** (110i ; 210i) selon la revendication 2, *dans lequel* la **grille de constellation** est **une grille de constellation de modulation par déplacement de phase binaire BPSK,**
*et dans lequel* les informations d'extraction comprennent 1 bit par échantillon de fréquence rapporté.

**4.** **Émetteur-récepteur** (110i ; 210i) selon la revendication 2, *dans lequel* la **grille de constellation** est **une grille de constellation de modulation par déplacement de phase en quadrature QPSK,**
*et dans lequel* les informations d'extraction comprennent 2 bits par échantillon de fréquence rapporté.

**5.** **Émetteur-récepteur** (110i ; 210i) selon la revendication 1, *dans lequel* les informations d'erreur comprennent des composants en phase et en Quadrature Q quantifiés du vecteur d'erreur mesuré.

**6.** **Émetteur-récepteur** (110i ; 210i) selon la revendication 5, *dans lequel* les composants I/Q du vecteur d'erreur mesuré sont quantifiés en utilisant **une représentation des nombres à virgule flottante.**

**7.** **Émetteur-récepteur** (110i ; 210i) selon la revendication 6, *dans lequel* les composants I/Q du vecteur d'erreur mesuré utilisent **une valeur d'exposant commune.**

**8.** **Dispositif d'abonné** (200) comprenant **un émetteur-récepteur** (210i) selon l'une quelconque des revendications 1 à 7,
*et dans lequel* le dispositif d'abonné est couplé en communication avec le dispositif de commande de vectorisation à travers la ligne de transmission.

**9.** **Noeud d'accès** (100) comprenant **un émetteur-récepteur** (110i ;) selon l'une quelconque des revendications 1 à 7.

**10.** **Dispositif de commande de vectorisation** (130) pour estimer **un coefficient de diaphonie** vers **une ligne de transmission** (Li), et configuré, lors de la transmission **d'un signal de sondage de diaphonie,** pour recevoir des **informations d'erreur** $\left( E_i^l(k) \right)$ indiquant **un vecteur d'erreur** (331 ; 332) tel que mesuré par **un émetteur-récepteur** (110i ; 210i) entre **un échantillon de fréquence reçu** (311 ; 312) du signal de sondage de diaphonie et **un point de constellation sélectionné** (321 ; 322) sur lequel l'échantillon de fréquence reçu est extrait,
**caractérisé en ce que** le dispositif de commande de vectorisation est en outre configuré pour recevoir des **informations d'extraction** $\left( I_i^l(k) \right)$ indiquant le point de constellation sélectionné sur lequel l'échantillon de fréquence reçu est extrait de l'émetteur-récepteur, et pour estimer le coefficient de diaphonie sur la base des informations d'erreur reçues et des informations extraites reçues.

**11.** **Noeud d'accès** (100) comprenant **un dispositif de commande de vectorisation** (130) selon la revendication 10.

**12.** **Procédé** pour mesurer une diaphonie sur **une ligne de transmission** (Li) et comprenant les étapes consistant, lors de la réception **d'un signal de sondage de diaphonie,** à mesurer **un vecteur d'erreur** (331 ; 332) entre **un échantillon de fréquence reçu** (311 ; 312) du signal de sondage de diaphonie et **un point de constellation sélectionné** (321 ; 322) sur lequel l'échantillon de fréquence reçu est extrait, et à rapporter des **informations d'erreur** $\left( E_i^l(k) \right)$ indiquant le vecteur d'erreur mesuré à **un dispositif de commande de vectorisation** (130) pour une estimation de diaphonie,
**caractérisé en ce que** le procédé comprend en outre l'étape consistant à rapporter **des informations d'extraction** $\left( I_i^l(k) \right)$ indiquant le point de constellation sélectionné sur lequel l'échantillon de fréquence reçu est extrait au dispositif de commande de vectorisation.

**13.** **Procédé** pour estimer un coefficient de diaphonie vers **une ligne de transmission** (Li), et comprenant l'étape consistant, lors de la transmission **d'un signal de sondage de diaphonie,** à recevoir des **informations d'erreur** $\left( E_i^l(k) \right)$ indiquant **un vecteur d'erreur** (331 ; 332) tel que mesuré par **un émetteur-récepteur** (110i ; 210i) entre **un échantillon de fréquence reçu** (311 ; 312) du signal de sondage de diaphonie et **un point de constellation sélectionné** (321 ; 322) sur lequel l'échantillon de fréquence reçu est extrait,
**caractérisé en ce que** le procédé comprend en outre les étapes consistant à recevoir des **informations d'extraction** $\left( I_i^l(k) \right)$ indiquant le point de constellation sélectionné sur lequel l'échantillon de fréquence reçu est extrait de l'émetteur-récepteur, et à estimer le coefficient de diaphonie sur la base des informations d'erreur reçues et des

informations extraites reçues.

Fig. 1

Fig. 2

Fig. 3A

Fig. 3B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090245335 A1